Europäisches Patentamt

European Patent Office

Office européen des brevets

(11) Publication number: **0 121 574**
**A1**

# EUROPEAN PATENT APPLICATION

published in accordance with Art. 158(3) EPC

(21) Application number: 83903217.4

(22) Date of filing: 14.10.83

Data of the international application taken as a basis:

(86) International application number:
**PCT/JP 83/00353**

(87) International publication number:
**WO 84/01636 (26.04.84 84/11)**

(51) Int. Cl.³: **G 06 F 3/12**

(30) Priority: 15.10.82 JP 181087/82

(43) Date of publication of application: 17.10.84
**Bulletin 84/42**

(84) Designated Contracting States: **DE FR GB**

(71) Applicant: **FANUC LTD, 5-1, Asahigaoka 3-chome Hino-shi, Tokyo 191 (JP)**

(72) Inventor: **KISHI, Hajimu,**
**Hinohirayamadai-Jutaku 1104 6-7-8, Asahigaoka, Hino-shi Tokyo 191 (JP)**
Inventor: **SEKI, Masaki, 3-15-2-406, Takaidonishi Suginami-ku, Tokyo 168 (JP)**
Inventor: **MIZUNO, Yutaka, 2-4, Takakura-cho Hachioji-shi, Tokyo 192 (JP)**

(74) Representative: **Billington, Lawrence Emlyn et al, HASELTINE LAKE & CO Hazlitt House 28 Southampton Buildings Chancery Lane, London WC2A 1AT (GB)**

(54) **DATA INPUT/OUTPUT APPARATUS.**

(57) A data input/output apparatus which has a controller (1), a tape punch (5), a tape reader (4) and a printer (6) and which can also be operated by commands from a host computer. The printer is provided with a data judging circuit for discriminating data which is not usually printed. When data, which is not usually printed, is detected by the data judging circuit, a signal for printing a character corresponding to the data is delivered to a printing part (6e) so that printing can be effected according to the number of digits set in a hit counter (6db) independently of the number of characters set according to data on the number of characters per line.

0121574

DESCRIPTION

DATA INPUT/OUTPUT UNIT

Technical Field

This invention relates to a transportable data input/output unit capable of being detached from the body of a numerical control device.

Background Art

In numerical control, there are cases where a host computer is used and made to perform a variety of data processing to create command data for the machining of a workpiece. The data created by the host computer is recorded on a paper tape by a tape puncher and, with the paper tape serving as the recording medium, is used as input information for another system. In creating the paper tape, the contents of the tape are printed out by a printer in order to provide a record thereof beforehand. Where an output from the host computer is recorded on the paper tape or printed on recording paper, the paper tape puncher and printer ordinarily are provided separately of the host computer body. These pieces of equipment are connected to the host computer and operate solely in response to commands therefrom. Unlike a system in which such peripheral equipment is of a disjointed nature, a system is conceivable in which the equipment operates on the basis of commands from a host computer when connected to the computer, but in which the contents of a paper tape may be read independently and printed for copying purposes when the equipment is disconnected from the host computer. However, a system of such type can be applied to only very limited systems and is inapplicable to others in certain aspects. Moreover, even where applicable, a disadvantage is that results cannot be obtained unless the host computer software is modified.

Accordingly, the object of the present invention is to provide a data input/output unit of a numerical control device in a numerical control system, which input/output unit is detachable from a host computer and includes a tape puncher, tape reader and printer combined into one. The input/output unit is capable of reading and printing the recorded contents of a paper tape independently, in which case data not ordinarily printed, such as "line feed" data, is capable of being printed out and the recorded contents of a paper tape displayed in accurate fashion. The data input/output unit is capable of printing continuously without performing a line feed operation in the middle of a line.

Disclosure of the Invention

The present invention provides a processing function which not only enables a data input/output unit to operate in accordance with a command from a host computer in order to create a paper tape, print out transferred data and enter data, but which also enables the unit itself to be programmed independently to create a paper tape and print the data borne by the paper tape. A printer is provided with a data discriminating circuit for discriminating data not ordinarily printed. When data not ordinarily printed is sensed by the data discriminating circuit, a signal for printing characters corresponding to the data is delivered to a printing section, a number of digits to which a bit counter is set without relation to the number of characters on one line of data are printed, and a line feed is performed. According to the present invention, there is provided a transportable data input/output unit capable of servicing several numerical·control devices, and it is also possible to print data not ordinarly printed, such as "line feed" data attached to the end of one line of print data. Furthermore, data can be printed continuously without effecting a line feed operation in the middle of a line.

Brief Description of the Drawings

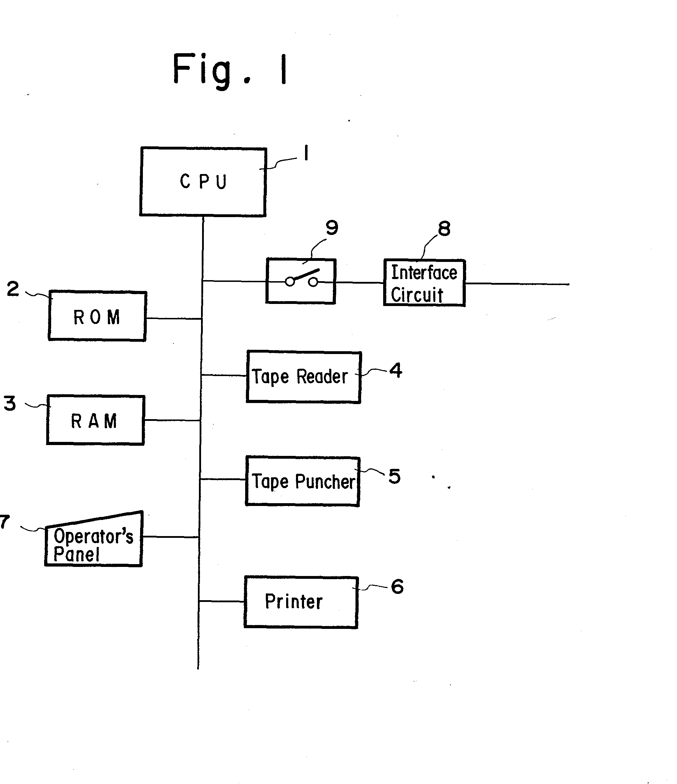

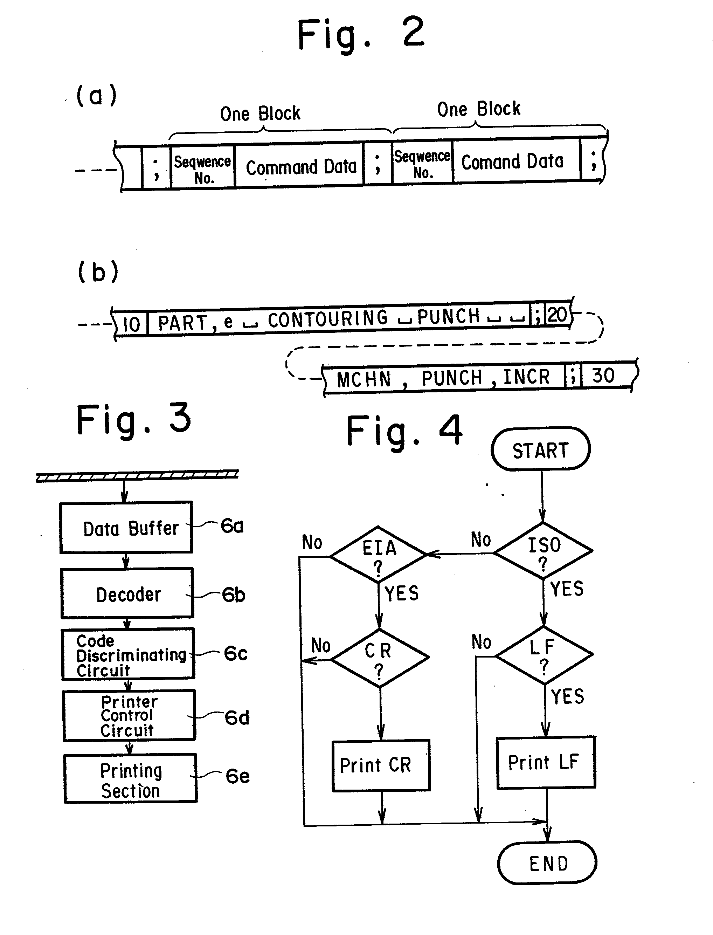

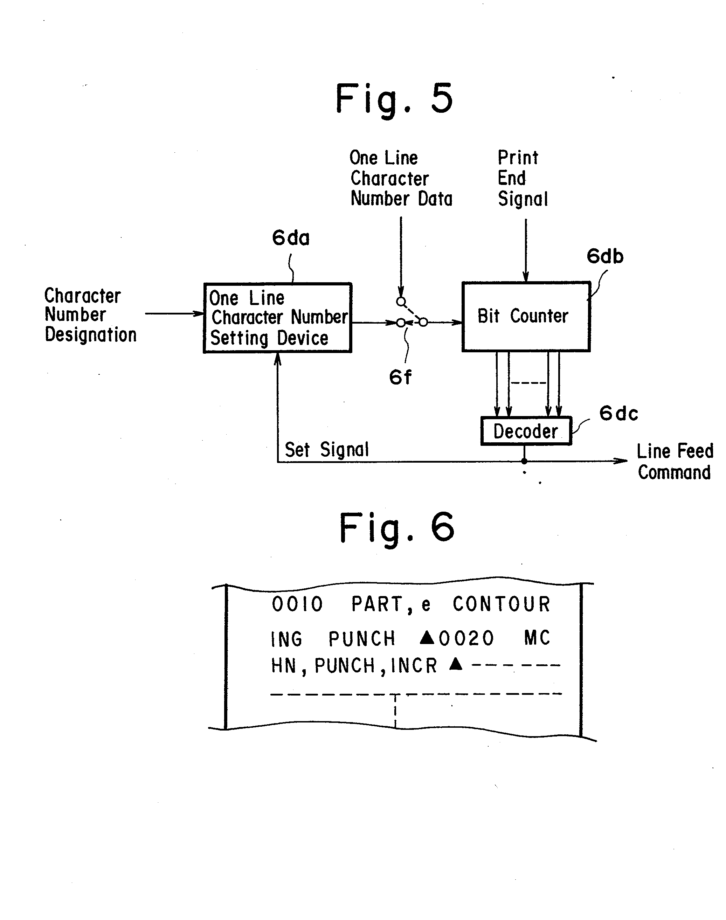

Fig. 1 is a block diagram of a data input/output unit according to the present invention, Fig. 2(a) is a view showing the arrangement of command data recorded on a paper tape, Fig. 2(b) is a view showing data written on a paper tape in character form, Fig. 3 is a block diagram showing the constitution of a printer, Fig. 4 is a flowchart showing the operation of a code discriminating circuit, Fig. 5 is a block diagram showing a portion of a printer control section, and Fig. 6 is a view showing a state recorded through use of a data discrimination circuit according to the present invention.

Best Mode for Carrying Out the Invention

An embodiment of the present invention will now be described in detail with reference to the drawings.

Fig. 1 is a block diagram of a data input/output unit according to the present invention. In the Figure, numeral 1 denotes a control device, 2 a read-only memory (hereafter abbreviated to "ROM") storing a program necessary for operating the data input/output unit, 3 a random-access memory (hereafter abbreviated to "RAM") for temporarily storing data or the like read from a paper tape or the like, 4 a tape reader, 5 a tape puncher, and 6 a printer for printing data read by the tape reader, data punched by the tape puncher 5, or data received from a host computer. Numeral 7 denotes an operator's panel having character keys, numeric keys, function keys and the like. In particular, the panel has an operation changeover switch for deciding whether operation is by a command from the host computer or whether the data input/output unit of the present invention is to operate independently. Numeral 8 is an interface circuit for interfacing the host computer. Numeral 9 designates a changeover circuit.

The unit shown in Fig. 1 is capable of performing the following operations by itself. Specifically, data entered from the operator's panel 7 can be printed out

0121574

immediately by the printer 6 and the data can be stored in the RAM 3.  In addition, after the results of the print-out are checked, errors in the data stored in the RAM 3 can be corrected.  After the correction operation, the data stored in the RAM 3 can be printed out and punched in a paper tape as well.  Furthermore, data read from the tape reader 4 can be printed out by the printer 6 and punched in a paper tape by the tape puncher 5 to create a copy of the paper tape.  These operations can be performed simultaneously.

The unit shown in Fig. 1 can be connected to a host computer by turning on the changeover circuit 9 through manipulation of the operation changeover switch provided on the operator's panel 7, and data can be transferred from the operator's panel 7 or tape reader 4 to the host computer through the RAM 3 or by by-passing the RAM.  In addition, data transferred from the host computer can be recorded on a paper tape by the tape puncher 5, and the data can also be printed out by the printer 6.

In numerical control, control command data are composed of several commands each one of which is expressed in a unit referred to as a block.  A single block is distinguished by an end-of-block code.  Fig. 2(a) is a view showing the arrangement of command data recorded on a paper tape.  One block of command data starts with a Sequence No. and ends with an end of block symbol ";".  Fig. 2(b) shows data written on a

0121574

paper tape in character form. In actuality, the data is expressed by a combination of an eight-bit punched portion and an unpunched portion. Further, the end-of-block symbol ";" is expressed by a code "CR" in accordance with EIA standards, and by a code "LF" in accordance with ISO standards.

Fig. 3 is a block diagram showing the constitution of printer 6. Numeral 6a denotes a data buffer, 6b a decoder for decoding a print instruction, and 6c a code discriminating circuit. The decoder 6b and code discriminating circuit 6c constitute a data discriminating circuit. Numeral 6d denotes a printer control circuit, and 6e a printing section.

The operation of the printer shown in Fig. 3 will now be described.

Print data input to the data buffer 6a from a data bus enters the code discriminating circuit 6c through the decoder 6b. As shown in Fig. 4, the code discriminating circuit 6c determines whether the print data conforms to ISO or EIA standards. If the data conforms to ISO standards, then it is determined whether the print data is data indicative of an end-of-block symbol. If the decision is NO, then the data is sent to the printer control circuit 6d and an ordinary printing operation is performed. If the decision is YES, then an appropriate symbol expressing end of block, e.g., a code such as "LF" or "_", is printed. Print data other than that in accordance with the ISO standards causes the program to shift to a decision step concerning EIA standards. If the print data conforms to EIA standards, it is determined whether or not the print data is data indicative of an end-of-block symbol. If the decision is NO, the data is send to the printer control circuit 6d and an ordinary printing operation is performed. If the decision is YES, then an appropriate symbol expressing end of block, e.g., a code such as "CR" or "_", is printed.

With an ordinary printer, the printer control circuit 6d is provided with a bit counter for determining the number of characters (number of digits) printed on a single line. Prior to the operation for printing a single line, the number of characters to be printed on a single line is set in advance by the controller 1. The arrangement is such that the bit counter is decremented each time a single character is printed, with a line feed being effected when the status of the bit counter becomes zero. As shown in Fig. 5, the printer according to the present invention includes a single line character number setting device 6da provided in the printer control circuit 6d. The total number of characters on a single line, e.g., 132, is set by the setting device 6da before one line of printing is executed. Thereafter, the bit counter is decremented whenever the printing section 6e prints one character. When the status of the bit counter becomes zero, this is sensed by a decoder 6dc which responds by delivering a line feed instruction to the printing section 6e and a set signal to the single line character number setting device 6da. The latter sets the bit counter 6db to the number of characters on one line of text, which is followed by the operation for printing the next line. Fig. 6 is a view showing data "solid printed" on a recording paper. Numeral 6f denotes a changeover circuit for switching between an ordinary printing operation and the printing operation, referred to as "solid printing", of the present invention.

It should be noted that the changeover circuit 6f can be switched by the operator's panel 7, as well as by a command from the host computer.

As for setting the bit counter 6db to the number of characters, the total number of characters on one line may be set each time printing of one line of characters ends.

As described in detail above, the present invention is equipped with a processing function which not only enables a data input/output unit to operate in accordance with a command from a host computer in order to create a paper tape, print out transferred data and enter data, but which also enables the unit itself to be programmed independently to create a paper tape and print the data borne by the paper tape. The present invention therefore serves well as a transportable data input/output unit capable of servicing several numerical control devices.  Furthermore, the invention is capable of performing a "solid printing" operation and is additionally capable of printing data not ordinarily printed, such as "line-feed" data, which is attached to the end of one line of print data. Accordingly, besides eliminating blank spaces from recording paper to dispense with wasted portions of the paper, the breaks between items of data are clearly defined, thereby allowing the data appearing on the paper tape to be correctly understood.

Industrial Applicability

The present invention is detachable from a host computer and is capable of printing data not ordinarily printed, such as "line-feed" data, which is attached to the end of one line of print data.  In addition, data can be printed continuously without effecting a line feed operation in the course of a line.  As a result, wasted portions of a recording paper are eliminated and breaks between items of data are clarified.  The present invention therefore serves well as a transportable data input/output unit capable of servicing several numerical control devices.

CLAIMS:

1.   A data input/output unit capable of being connected to a host computer, characterized by having, incorporated therewithin, a control device, a read-only memory storing a program necessary for operation of said data input/output unit, a random-access memory for temporarily storing data or the like read out of an auxiliary memory device, a tape reader for reading data contained by a tape, and a tape puncher for punching data into a paper tape, said printer being provided with a data discriminating circuit for discriminating data which is not ordinarily printed, wherein when data not ordinarily printed is sensed by said data discriminating circuit, a signal for printing characters corresponding to said data is delivered, a number of digits set without relation to a number of characters on one line of data are printed, and a line feed is performed.

2.   A data input/output unit according to claim 1, characterized in that said printer includes a bit counter for deciding the number of digits, which is the number of characters printed on one line.

# Fig. 1

0121574

2

# Fig. 2

(a)

(b)

# Fig. 3

# Fig. 4

# Fig. 5

One Line
Character
Number Data

Print
End
Signal

Character
Number
Designation

One Line
Character Number
Setting Device

6da

6f

Bit Counter

6db

Decoder

6dc

Set Signal

Line Feed
Command

# Fig. 6

OOIO   PART, e  CONTOUR

ING   PUNCH  ▲0020   MC

HN, PUNCH, INCR ▲ ─ ─ ─ ─ ─ ─

─ ─ ─ ─ ─ ─ ─ ─ ─ ─ ─ ─

# INTERNATIONAL SEARCH REPORT

0121574

International Application No. PCT/JP83/00353

## I. CLASSIFICATION OF SUBJECT MATTER (if several classification symbols apply, indicate all) [3]

According to International Patent Classification (IPC) or to both National Classification and IPC

Int. Cl.[3]   G06F 3/12

## II. FIELDS SEARCHED

### Minimum Documentation Searched [4]

| Classification System | Classification Symbols |
|---|---|
| I P C | G06F 3/12, G06K 15/00 |

| | Documentation Searched other than Minimum Documentation to the Extent that such Documents are Included in the Fields Searched [5] |
|---|---|
| | Jitsuyo Shinan Koho                1968 – 1982 |
| | Kokai Jitsuyo Shinan Koho        1971 – 1982 |

## III. DOCUMENTS CONSIDERED TO BE RELEVANT [14]

| Category* | Citation of Document, [15] with indication, where appropriate, of the relevant passages [17] | Relevant to Claim No. [18] |
|---|---|---|
| Y | JP,A, 57-90741 (Sato Kabushiki Kaisha) 5. June. 1982 (05. 06. 82) | 1, 2 |
| Y | JP,A, 56-57135 (Nippon Electric Co., Ltd.) 19. May. 1981 (19. 05. 81) | 1, 2 |
| Y | JP,B2, 57-6613 (Sharp Corp.) 5. February. 1982 (05. 02. 82) | 1, 2 |
| Y | JP,B2, 53-41491 (Hitachi, Ltd.) 4. November. 1978 (04. 11. 78) | 1, 2 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| December 7, 1983   (07. 12. 83) | January 9, 1984   (09. 01. 84) |

| International Searching Authority [1] | Signature of Authorized Officer [20] |
|---|---|
| Japanese Patent Office | |

Form PCT/ISA/210 (second sheet) (October 1981)